# EUROPÄISCHE PATENTSCHRIFT

(11) **EP 0 751 173 B1**
(45) Veröffentlichungstag und Bekanntmachung des Hinweises auf die Patenterteilung: **05.12.2001**
(21) Anmeldenummer: 96109680.7
(22) Anmeldetag: 17.06.1996
(51) Int. Cl.: C08J 9/08

(54) **Geschlossenporige Siliconschäume, Verfahren zu ihrer Herstellung und ihre Verwendung**
Closed cell silicone foams, their preparation and use
Mousses de silicone à cellules fermées, leur préparation et leur application

(30) Priorität: 28.06.1995 DE 19523469
(43) Veröffentlichungstag der Anmeldung: 02.01.1997
(73) Patentinhaber: GE Bayer Silicones GmbH & Co. KG, 40699 Erkrath (DE)
(72) Erfinder: Berger, Armin, Dipl.-Ing., 40764 Langenfeld (DE); Wrobel, Dieter, Dr., 51375 Leverkusen (DE)

(56) Entgegenhaltungen:
- EP-A- 0 149 191
- EP-A- 0 235 052
- US-A- 4 590 222
- CHEMICAL ABSTRACTS, vol. 119, no. 22, 29.November 1993 Columbus, Ohio, US; abstract no. 227710, XP002015556 & JP-A-05 156 061 (SHINETSU POLYMER CO.)
- DATABASE WPI Week 7417 Derwent Publications Ltd., London, GB; AN 74-31638V XP002015557 & JP-B-74 012 896 (SHIN-ETSU CHEM IND CO LTD)
- DATABASE WPI Week 8310 Derwent Publications Ltd., London, GB; AN 83-23771K XP002015558 & JP-A-58 015 539 (SUMITOMO ELEC IND KK)
- DATABASE WPI Week 7824 Derwent Publications Ltd., London, GB; AN 78-43136A XP002015559 & JP-A-53 050 251 (HITACHI KK)
- DATABASE WPI Week 8017 Derwent Publications Ltd., London, GB; AN 80-29910C XP002015560 & JP-A-55 034 261 (OTSUKA KAGAKU YAKUHIN)
- DATABASE WPI Week 9407 Derwent Publications Ltd., London, GB; AN 94-054011 XP002015561 & JP-A-06 009 813 (TOKUYAMA SEKISHI KOGYO KK)
- DATABASE WPI Week 9517 Derwent Publications Ltd., London, GB; AN 95-126293 XP002015562 & JP-A-07 048 557 (EIWA KASEI KOGYO KK)

## Beschreibung

Die vorliegende Erfindung betrifft geschlossenporige, elastische Siliconschäume, erhältlich durch die Umsetzung von additionsvernetzenden Siliconkautschukmischungen mit feinteiligen Alkalihydrogencarbonaten oder Ammoniumcarbonaten bzw. Kombinationen mit Polycarbonsäuren sowie deren Salzen, ein Verfahren zur Herstellung und deren Verwendung.

Der Einsatz von Natriumhydrogencarbonat zum Aufschäumen von Kautschuken ist bekannt. Durch die schnelle Diffusion des hierbei entstehenden Kohlendioxids erhält man jedoch in der Regel offenzelligen Schäumen mit einer groben Schaumstruktur (mit Lunkern). Die Herstellung von geschlossenzelligen Schäumen ist nach Literaturangaben, wie z.B. Encyclopedia of Polymer Science and Engineering, John Wiley & Sons 1985, Volume 2, S. 439, extrem schwierig.

Die EP-A-0 235 052 offenbart Treibmittel für Siliconschäume. Als Treibmittel wird eine Mischung aus Calciumcarbonat und mindestens einer organischen Carbonsäure mit 1 bis 20 Kohlenstoffatomen verwendet. Hierdurch entstehen lediglich Schäume die eine gleichmäßige Porenstruktur aufweisen. Geschlossenporige Siliconschäume können nicht hergestellt werden.

Die JP-A-53050251 und JP-A-5 5034261 offenbaren thermoplastische Zusammensetzungen auf Basis von Polypropylen oder Copylmeren davon bzw. Copolymere aus Ethylenvinylacetat, Vinylchlorid und Acrylat, die mit Natriumcarbonat und organischen Hydrazinen bzw Natriumcarbonat oder Azocarbamiden und zusätzlichen Beschleunigern wie Zinkcarbonat gemischt werden.

Weiterhin ist bekannt, daß Natriumhydrogencarbonat als intumeszierende Substanz (Brandlöschsubstanz) in Siliconkautschuken eingesetz wird (DE-A-37 13 267).

Hierbei entsteht erst im Brandfall ein wärmedämmender Schaum. In US 3 634 136 wird durch einen Zusatz von hohen Mengen Natriumhydrogencarbonat in Silikonkautschuk, der unterhalb der Zersetzungstemperatur von Natriumhydrogencarbonat vulkanisiert wird, d.h. nicht aufschäumt, eine erhöhte Flammwidrigkeit bewirkt.

Die US 4 590 222 offenbart Siliconelastomerschäume, die aus einer Mischung aus Triorganosiloxane endblockiertem polydiorganosiloxane, einem Copolymerharz aus triorganosiloxyleinheiten und SiO₂, Platin, Organhydrogensiloxan, 20 bis 40 Teilen Hydroxyl endblockiertes Polydiorganosiloxan mit einem Hydroxylgehalt von 2 bis 4 Gew.%, Füllstoffe undorganische Alkohole. Als Treibmittel zur Schaumbildung dient der bei der Reaktion entstehende Wasserstoff.

Siliconschäume werden daher unter Verwendung von organischen Treibmitteln, wie z.B. Azodicarbonamid, Azobisisobutyronitril oder Wasserstoff abspaltenden Siloxanen, hergestellt. Nachteile dieser Massen sind die Toxizität der Spaltprodukte der organischen Treibmittel bzw. die Gefahr von Explosionen durch den entstehenden Wasserstoff.

Aufgabe der vorliegenden Erfindung war daher die Bereitstellung von geschlossenporigen Siliconmassen, die mit einem unbedenklichen Treibmittel aufgeschäumt werden können.

Überraschenderweise wurde nun gefunden, daß diese Aufgabe durch die Umsetzung von additionsvernetzenden Siliconmassen, mit feinteiligem Alkalihydrogen- oder Ammoniumcarbonat enthaltendem Treibmittel bestimmter Korngröße bei erhöhter Temperatur gelöst werden kann.

Gegenstand der vorliegenden Erfindung sind daher geschlossenporige Siliconschäume, erhältlich durch die Umsetzung einer Mischung aus
a) 100 Teilen mindestens eines vinylgruppenhaltigen linearen oder verzweigten Organopolysiloxans mit mindestens 2, vorzugsweise 3 Vinylgruppen mit einer Viskosität von 0,1 bis 1000 Pas,
b) 3 bis 200, bevorzugt 5 bis 50 Teile mindestens eines, gegebenenfalls oberflächlich modifizierten Füllstoffs
c) 0,5 bis 10, bevorzugt 1 bis 8 Teilen Hydrogensiloxan mit mindestens 3 SiH-Funktionen pro Molekül,
d) 0,01 bis 10, bevorzugt 0,01 bis 1 ppm Platin in Form eines Platinkatalysators,
e) 0,01 bis 5, bevorzugt 0,03 bis 3 Teilen eines Inhibitors und
f) 0,5 bis 10 Teilen feinteiligem Alkalihydrogen- oder Ammoniumcarbonat enthaltendes Treibmittel mit einer mittleren Korngröße unter 40 µm,
die bei Temperaturen oberhalb 140 °C aufgeschäumt und vulkanisiert werden , mit der Maßgabe, daß die Mischung nicht 20 bis 40 Teile Hydroxyl endblockiertes Polydiorganosiloxan mit einem Hydroxylgehalt von 2 bis 4 Gew.% enthält.

Bei den vinylgruppenhaltigen Organopolysiloxanen (a) handelt es sich um vorzugsweise lineare oder verzweigte Organopolysiloxane mit mindestens 2 Vinylgruppen, deren Viskosität bei 20°C im Bereich von 0,1 bis 1000 Pas liegen kann. Besonders bevorzugt sind dabei vinylendgestoppte Polydimethylsiloxane mit einer Viskosität von 0,2 bis 150 Pas, gegebenenfalls in Mischung mit Polydimethylsiloxanen, die seitenständige Vinylgruppen enthalten.

Als Füllstoffe (b) sind beispielsweise Extenderfüllstoffe, wie z.B. Quarz- und Cristobalitmehl, sowie gefällte oder pyrogene Kieselsäuren, deren Oberfäche vorzugsweise vor oder während des Mischprozesses mit an sich bekannten Substanzen, wie z.B. Silazanen mit und ohne Zusatz von Wasser, behandelt werden.

Komponente b) ist dabei vorzugsweise feinteilige, pyrogene oder gefällte Kieselsäure, die gegebenenfalls mit Hexamethyldisilazan und/oder Tetramethyldivinyldisilazan oberflächlich modifiziert ist.

Komponente (c) im Sinne der Erfindung sind bekannte Polyorganosiloxane, die an mindestens drei Siliciumatomen Wasserstoffatome tragen, wie z.B. Verbindungen der Formel 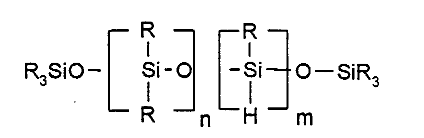
mit R = C₁-C₈-Alkyl, C₆-C₈-Aryl
m ≥ 3 und
m + n = 3 - 1 000.

Bei dem Pt-Katalysator (d) handelt es sich vorzugsweise um Pt-Komplexe, die die Anlagerung von Si-H-Gruppen an Vinylsiloxane katalysieren. Bevorzugt sind daher Pt(O)-Komplexe mit Vinylsiloxanen als Liganden. Es können jedoch auch andere Metallkomplexe, wie z.B. Rh-Verbindungen verwendet werden. Vorzugsweise werden in den Siloxanpolymeren lösliche Pt(0)-Komplexe mit Vinylsiloxanliganden eingesetzt.

Als Inhibitoren (e) eignen sich alle Verbindungen, die eine gezielte Reduktion der Vernetzungsgeschwindigkeit ermöglichen, jedoch keine irreversible Schädigung des Katalysators bewirken.

Besonders bevorzugt werden kurzkettige oder zyklische Polydimethylsiloxane mit mehreren benachbarten Vinylgruppen an den Siliciumatomen, wie z.B. Tetramethydivinyldisiloxan und/oder Tetramethytetravinylcyclotetrasiloxan.

Komponente (f) (Treibmittel) ist vorzugsweise NaHCO₃, gegebenenfalls unter Zusatz von Zitronensäure bzw. sauren Zitronensäuresalzen oder anderen Polycarbonsäuren sowie deren Salzen. Die mittlere Korngröße von Komponente f) liegt bevorzugt unter 10 µm.

Die Dosierung des Treibmittels wird nach dem gewünschten Aufschäumgrad gewählt. Vorzugsweise werden 0,5 bis 5 Teile eingesetzt.

Darüber hinaus können weitere Zusätze, wie z.B. Farbpigmente oder Additive zur Erhöhung der Flammwidrigkeit, wie z.B. Ruß oder TiO₂, eingesetzt werden.

Gegenstand der vorliegenden Erfindung ist zudem ein Verfahren zur Herstellung der erfindungsgemäßen geschlossenporigen Siliconschäume, wonach die Komponenten a) bis f) auf einer Unterlage aufgerakelt und in Heißluft bei Temperaturen oberhalb 140°C, vorzugsweise bei 180 bis 220°C, aufgeschäumt und gleichzeitig ausgehärtet werden. Alternativ kann die Mischung auch in einer teilgefüllten Form, z.B. mit einem Spritzgießautomaten, bei den gleichen Temperaturen zu einem Formschaum vulkanisiert werden.

Gegenstand der vorliegenden Erfindung ist zudem die Verwendung der erfindungsgemäßen Schäume als textile Flächengebilde oder Drahtgeweben als Polstermaterialien sowie als Wärmedämm- und Brandschutzmaterialien.

Die nachfolgenden Beispiele, in denen alle Teile Gewichtsteile bedeuten, erläutern die Erfindung, ohne dabei jedoch beschränkend zu wirken.

### Beispiel 1 (erfindungsgemäß)

In einem Kneter werden 36 Teile vinylendgestopptes Polydimethylsiloxan mit einer Viskosiät von 10 Pas (Polymer 1) mit 4 Teilen Hexamethyldisilazan, 0,3 Teilen Tetramethyldivinyldisilazan und 3 Teilen Wasser gemischt und anschließend mit 18 Teilen pyrogener Kieselsäure mit einer BET-Oberfäche von 300 m²/g zu einer homogenen Masse verketet (Einarbeitung des Füllstoffs gemäß DE-OS 2 535 334). Die Mischung wurde zunächst auf 130°C erwärmt und 1,5 Stunden im geschlossenen Kneter gerührt und danach bei 160°C unter Vakuum von Wasser und anderen flüchtigen Bestandteilen befreit. Nach dem Erkalten dieser Basismischung wird die Mischung mit folgenden weiteren Zusätzen vermischt:

88 g dieser Basismischung werden mit 62 g Polymer 1, 2,1 g eines trimethylsilylendgestoppten Polymethylhydrogensiloxans mit durchschnittlich 20 Methylhydrogensiloxyeinheiten und 20 Dimethylsiloxyeinheiten pro Molekül, 0,043 g Tetramethyltetravinylcyclotetrasiloxan mit einem Gehalt von 105 ppm Pt in Form eines Pt-Komplexes (entspricht 0,03 ppm Pt in der Gesamtformulierung) mit Tetramethyltetravinylcyclotetrasiloxan als Ligand und 2,5 g feinteiliges NaHCO₃ mit einer mittleren Korngröße von 9,7 µm vermischt, etwa 6 mm dick auf eine Aluminiumfolie aufgerakelt und 20 Minuten bei 180°C in einem Umlufttrockenschrank aufgeschäumt und vulkanisiert.
Man erhält eine geschlossenzellige Schaumbahn mit einer gleichmäßigen Schaumstruktur, die eine Rohdichte von 0,34 g/cm³ besitzt.
Der gleiche Versuch mit einer Verschäumungstemperatur von 220°C liefert ebenfalls eine gleichmäßige Schaumstruktur mit einer Rohdichte von 0,3 g/cm³.

### Beispiel 2 (Vergleich)

Wie Beispiel 1 mit NaHCO₃ mit einer mittleren Teilchengröße von 44 µm.

Man erhält sowohl bei 180 als auch bei 220°C einen Schaum mit sehr ungleichmäßiger Struktur, die große aufgeplatzte Blasen enthält (offenzellig).

### Beispiel 3 (erfindungsgemäß)

88 g der Basismischung aus Beispiel 1 werden mit 62 g Polymer 1, 9,1 g eines trimethylsilylendgestoppten Polymethylhydrogensiloxans mit durchschnittlich 20 Methylhydrogensiloxyeinheiten und 20 Dimethylsiloxyeinheiten pro Molekül, 2,6 g Tetramethyltetravinylcyclotetrasiloxan mit einem Gehalt von 11 ppm Pt in Form eines Pt-Komplexes (entspricht 0,17 ppm Pt in der Gesamtformulierung) mit Tetramethyltetravinylcyclotetrasiloxan als Ligand und 2,5 g feinteiliges NaHCO₃ mit einer mittleren Korngröße von 9,7 µm vermischt, etwa 6 mm dick auf eine Aluminiumfolie aufgerakelt und 20 Minuten bei 180°C in einem Umlufttrockenschrank aufgeschäumt und vulkanisiert.
Man erhält eine geschlossenzellige Schaumbahn mit einer gleichmäßigen Schaumstruktur, die eine Rohdichte von ca. 0,3 g/cm³ besitzt.

### Beispiel 4 (erfindungsgemäß)

Die Mischung aus Beispiel 1 wird in eine Preßplattenform (11mm*16mm*6 mm) so eingefüllt, daß sich die Mischung sich in einer Hälfte der Form befindet. Anschließend verschließt man die Form mit einer Deckplatte und vulkanisiert in einer Presse 20 Minuten bei 180°C.
Man erhält einen geformten Schaum mit gleichmäßiger Schaumstruktur mit einer Rohdichte von etwa 0,6 g/cm³.

## Patentansprüche

1. Geschlossenporige Siliconschäume, erhältlich durch die Umsetzung einer Mischung aus
a) 100 Teilen mindestens eines vinylgruppenhaltigen linearen oder verzweigten Organopolysiloxans mit mindestens 2 Vinylgruppen mit einer Viskosität von 0,1 bis 1000 Pas,
b) 3 bis 200 Teile mindestens eines, gegebenenfalls oberflächlich modifizierten Füllstoffs,
c) 0,5 bis 10 Teilen Hydrogensiloxan mit mindestens 3 SiH-Funktionen pro Molekül,
d) 0,01 bis 10ppm Platin in Form eines Platinkatalysators,
e) 0,01 bis 5 Teilen eines Inhibitors und
f) 0,5 bis 10 Teilen feinteiligem Alkalihydrogen- oder Ammoniumcarbonat enthaltendes Treibmittel mit einer mittleren Korngröße unter 40 µm,
die bei Temperaturen oberhalb 140°C aufgeschäumt und vulkanisiert werden mit der Maßgabe, daß die Mischung nicht 20 bis 40 Teile Hydroxyl-endblockiertes Polydiorganosiloxan mit einem Hydroxylgehalt von 2 bis 4 Gew.-% enthält.

2. Geschlossenporige Siliconschäume nach Anspruch 1, **dadurch gekennzeichnet, daß** Komponente a) ein vinylendgestopptes Polydimethylsiloxan mit a) einer Viskosität von 0,2 bis 150 Pas, gegebenenfalls in Mischung mit Polydimethylsiloxanen, die seitenständige Vinylgruppen enthalten, ist.

3. Geschlossenporige Siliconschäume nach einem der Ansprüche 1 bis 2, **dadurch gekennzeichnet, daß** Komponente b) feinteilige, pyrogene oder gefällte Kieselsäure, die gegebenenfalls mit Hexamethyldisilazan/Tetramethyldivinyldisilazan oberflächlich modifiziert sein kann, ist.

4. Geschlossenporige Siliconschäume nach einem der Ansprüche 1 bis 3, **dadurch gekennzeichnet, daß** Komponente d) mindestens ein Pt(0)-Komplex mit Vinylsiloxanen als Liganden ist.

5. Geschlossenporige Siliconschäume nach einem der Ansprüche 1 bis 4, **dadurch gekennzeichnet, daß** der Inhibitor e) Tetramethyldivinyldisiloxan und/oder Tetramethyltetravinylcyclotetrasiloxan ist.

6. Geschlossenporige Siliconschäume nach einem der Ansprüche 1 bis 5, **dadurch gekennzeichnet, daß** das Treibmittel f) Natriumhydrogencarbonat ist.

7. Geschlossenporige Siliconschäume nach einem der Ansprüche 1 bis 6, **dadurch gekennzeichnet, daß** das Treibmittel f) Natriumhydrogencarbonat in Kombination mit Polycarbonsäuren sowie deren Salze ist.

8. Geschlossenporige Siliconschäume nach einem der Ansprüche 1 bis 7, **dadurch gekennzeichnet, daß** die mittlere Korngröße des Treibmittels unter 10 µm liegt.

9. Verfahren zur Herstellung von geschlossenporigen Siliconschäumen, **dadurch gekennzeichnet, daß** Mischungen nach Anspruch 1 aus den Komponenten a) bis f) auf einer Unterlage ausgerakelt und bei Temperaturen oberhalb 140°C auf-geschäumt und gleichzeitig ausgehärtet werden.

10. Verwendung der Siliconschäumen nach Anspruch 1 als textile Flächengebilde, Polstermaterial, Wärmedämm- und Brandschutzmaterial.

## Claims

1. Closed-cell silicone foams obtainable by the reaction of a mixture of
a) 100 parts of at least one vinyl-containing linear or branched organopolysiloxane containing at least 2 vinyl groups and having a viscosity of 0.1 to 1000 Pas.
b) 3 to 200 parts of at least one optionally surface-modified filler,
c) 0.5 to 10 parts of hydrogen siloxane containing at least 3 SiH functions per molecule,
d) 0.01 to 10 ppm of platinum in the form of a platinum catalyst,
c) 0.01 to 5 parts of an inhibitor, and
f) 0.5 to 10 parts of a finely divided blowing agent which contains an alkali metal bicarbonate or ammonium carbonate and has an average particle size of below 40 *µ*m,
which are expanded and vulcanized at temperatures above 140°C, with the proviso that the mixture does not contain 20 to 40 parts of hydroxyl-endblocked polydiorganosiloxane having a hydroxyl content of 2 to 4% by weight.

2. Closed-cell silicone foams according to Claim 1, **characterized in that** component a) is a vinyl-end-stopped polydimethylsiloxane having a) a viscosity of 0.2 to 150 Pas, optionally in mixture with polydimethylsiloxanes containing vinyl side groups.

3. Closed-cell silicone foams according to either of Claims 1 and 2. **characterized in that** component b) is finely divided pyrogenic or precipitated silica which may optionally have been surface-modified with hexamethyldisilazane/tetramethyldivinyldisilazane.

4. Closed-cell silicone foams according to any of Claims 1 to 3, **characterized in that** component d) is at least one Pr(0) complex with vinylsiloxanes as ligands.

5. Closed-cell silicone foams according to any of Claims 1 to 4, **characterized in that** the inhibitor e) is tetramethyldivinyldisiloxane and/or tetramethyltetravinylcyclotetrasiloxane.

6. Closed-cell silicone foams according to any of Claims 1 to 5, **characterized in that** the blowing agent f) is sodium bicarbonate.

7. Closed-cell silicone foams according to any of Claims 1 to 6, **characterized in that** the blowing agent f) is sodium bicarbonate in combination with polycarboxylic acids and also salts thereof.

8. Closed-cell silicone foams according to any of Claims 1 to 7, **characterized in that** the average particle size of the blowing agent is below 10 *µ*m.

9. Process for producing closed-cell silicone foams, **characterized in that** mixtures of components a) to f) according to Claim 1 are knife-coated onto a surface and expanded and simultaneously cured at temperatures above 140°C.

10. Use of the silicone foams according 10 Claim 1 as textile sheet materials, cushioning material, thermal insulation material and fire protection material.

## Revendications

1. Mousses de silicone à pores fermés pouvant être obtenues par la réaction d'un mélange de
a) 100 parties d'au moins un organopolysiloxane linéaire ou ramifié contenant des groupes vinyle, ayant au moins deux groupes vinyle et une viscosité de 0,1 à 1 000 Pas,
b) 3 à 200 parties d'au moins une charge éventuellement modifiée en surface,
c) 0,5 à 10 parties d'hydrogénosiloxane ayant au moins trois fonctions SiH par molécule,
d) 0,01 à 10 ppm de platine sous forme d'un catalyseur au platine,
e) 0,01 à 5 parties d'un inhibiteur et
f) 0,5 à 10 parties d'un agent d'expansion finement divisé contenant un hydrogénocarbonate alcalin ou du carbonate d'ammonium, d'une taille moyenne de grains inférieure à 40 µm,
qui sont expansées et vulcanisées à des températures supérieures à 140°C, à condition que le mélange ne contienne pas 20 à 40 parties de polydiorganosiloxane à terminaisons hydroxyle ayant une teneur en hydroxyle de 2 à 4 % en masse.

2. Mousses de silicone à pores fermés selon la revendication 1, **caractérisées en ce que** le composant a) est un polydiméthylsiloxane à terminaisons vinyle ayant a) une viscosité de 0,2 à 150 Pas, éventuellement en mélange avec des polydiméthylsiloxanes qui contiennent des groupes vinyle latéraux.

3. Mousses de silicone à pores fermés selon l'une des revendications 1 à 2, **caractérisées en ce que** le composant b) est de l'acide silicique finement divisé, pyrogène ou précipité, qui peut éventuellement être modifié en surface avec de l'hexaméthyldisilazane/tétraméthyldivinyldisilazane.

4. Mousses de silicone à pores fermés selon l'une des revendications 1 à 3, **caractérisées en ce que** le composant d) est au moins un complexe de Pt(0) avec des vinylsiloxanes comme ligands.

5. Mousses de silicone à pores fermés selon l'une des revendications 1 à 4, **caractérisées en ce que** l'inhibiteur e) est le tétraméthyldivinyldisiloxane et/ou le tétraméthyltétravinylcyclotétrasiloxane.

6. Mousses de silicone à pores fermés selon l'une des revendications 1 à 5, **caractérisées en ce que** l'agent d'expansion f) est l'hydrogénocarbonate de sodium.

7. Mousses de silicone à pores fermés selon l'une des revendications 1 à 6, **caractérisées en ce que** l'agent d'expansion f) est l'hydrogénocarbonate de sodium en combinaison avec des acides polycarboxyliques ainsi que leurs sels.

8. Mousses de silicone à pores fermés selon l'une des revendications 1 à 7, **caractérisées en ce que** la taille moyenne de grains de l'agent d'expansion est inférieure à 10 µm.

9. Procédé de production de mousses de silicone à pores fermés, **caractérisé en ce que** des mélanges selon la revendication 1 constitués par les composants a) à f) sont appliqués à la racle sur un substrat et sont expansés et simultanément durcis à des températures supérieures à 140°C.

10. Utilisation des mousses de silicone selon la revendication 1 comme produit textile en nappe, matériau de rembourrage, matériau d'isolation thermique et matériau d'ignifugation.
